# FASCICULE DE BREVET EUROPEEN

(11) **EP 1 522 477 B1**
(45) Date de publication et mention de la délivrance du brevet: **24.05.2006**
(21) Numéro de dépôt: 04023668.9
(22) Date de dépôt: 05.10.2004
(51) Int. Cl.: B60T 13/569

(54) **Servomoteur pneumatique d'assistance au freinage comportant un diaphragme serti**
Pneumatischer Bremskraftverstärker mit eingepresstem Membran
Pneumatic brake booster having a crimped diaphragm

(30) Priorité: 06.10.2003 FR 0311695
(43) Date de publication de la demande: 13.04.2005
(73) Titulaire: ROBERT BOSCH GMBH, 70442 Stuttgart (DE)
(72) Inventeur: Simon Bacardit, Juan, 08013 Barcelone (ES)
(74) Mandataire: Hurwic, Aleksander Wiktor

(56) Documents cités:
- EP-A- 0 317 097
- DE-A- 4 440 657
- FR-A- 1 326 655

## Description

L'invention concerne un servomoteur pneumatique d'assistance au freinage.

L'invention concerne plus particulièrement un servomoteur pneumatique d'assistance au freinage pour un véhicule automobile, du type qui comporte une enveloppe rigide sensiblement cylindrique à l'intérieur de laquelle est mobile une cloison transversale liée à une tige d'actionnement d'un maître-cylindre associé, qui délimite de façon étanche dans l'enveloppe deux chambres de pression qui sont susceptibles d'être soumises à des pressions différentes pour actionner la tige d'actionnement du maître cylindre associé, du type dans lequel la cloison transversale mobile comporte un piston central solidaire d'une jupe périphérique en tôle qui est recouverte au moins à proximité de sa périphérie d'un diaphragme d'étanchéité en matériau élastomère dont une périphérie est fixée à l'enveloppe de manière étanche,

On connaît de nombreux exemples de servomoteurs de ce type, par exemple du document DE-4440657-A.

D'une manière conventionnelle, le diaphragme est fixé d'une part à la jupe du servomoteur à la jonction de la jupe et du piston central et d'autre part sur la périphérie de la jupe.

Cette conception impose que le diaphragme recouvre totalement la jupe. Par ailleurs, elle pose de nombreux problèmes d'étanchéité, d'une part, à ia jonction de ia jupe et du piston où l'étanchéité doit être réalisée entre trois éléments, et d'autre part à la périphérie de la jupe qui constitue une zone suivant laquelle la membrane est soumise à des forces de traction élevées, car la membrane est fixée sur sa périphérie à l'enveloppe du servomoteur.

Pour remédier à ces inconvénients, l'invention propose un servomoteur du type précédemment décrit, comportant des moyens d'étanchéité améliorés interposés entre la jupe et la membrane dans une partie intermédiaire de la jupe.

Dans ce but, l'invention propose un servomoteur du type décrit précédemment, caractérisé en ce que la jupe comporte, à proximité de sa périphérie, un gouttière annulaire emboutie délimitant une gorge intérieure qui est destinée à recevoir sans jeu un bourrelet périphérique qui fait saillie à la surface du diaphragme pour assurer la fixation étanche dudit diaphragme sur la jupe.

Selon d'autres caractéristiques de l'invention :
- la gouttière comporte, à proximité de la surface de la jupe, des bords extérieurs qui sont destinés à être écrasés l'un vers l'autre pour serrer localement la gorge intérieure sur un étranglement incurvé du bourrelet pour immobiliser axialement le diaphragme par rapport à la jupe,
- les parois de la gouttière se rejoignent en un fond sensiblement arrondi,
- le bourrelet comporte une extrémité arrondie, agencée à l'opposé de la surface du diaphragme par rapport à l'étranglement, qui est complémentaire du fond arrondi de la gouttière à l'intérieur de la gorge.

L'invention concerne aussi un dispositif de montage pour la fixation d'un diaphragme à une jupe d'un servomoteur tels que précédemment décrit. Ce dispositif est caractérisé en ce qu'il comporte au moins :
- un premier plateau qui est destiné à soiiiciier axialement le diaphragme au contact de la jupe du côté opposé au bourrelet et à la gouttière, pour maintenir le bourrelet dans la gorge intérieure de la gouttière,
- un deuxième plateau, agencé à l'opposé du premier plateau, qui comporte, en regard de la gouttière, au moins un outil de sertissage périphérique qui est destiné à écraser localement l'un vers l'autre les deux bords extérieurs opposés de la gouttière au droit de l'étranglement du bourrelet pour que les bords correspondants de la gorge intérieure épousent l'étranglement et immobilisent le bourrelet dans la gorge.

Selon d'autres caractéristiques du dispositif :
- chaque outil de sertissage comporte au moins deux mors qui sont opposés, alignés sensiblement suivant la direction radiale, et qui sont agencés suivant une position axiale déterminée pour écraser localement l'un vers l'autre les deux bords extérieurs de la gouttière au droit de l'étranglement,
- chaque outil de sertissage comporte un bras d'appui fixe, qui est agencé en retrait entre les mors, et dont l'extrémité comporte une surface d'appui concave complémentaire de la paroi extérieure convexe du fond arrondi de la gouttière, pour maintenir la gouttière lors de l'écrasement des bords de la gorge intérieure,
- chaque mors est conformé en portion de cylindre d'orientation tangente au bourrelet, d'une courbure sensiblement égale celle dune gorge associée de l'étranglement, et il est porté par l'extrémité d'un bras qui est monté pivotant sur le deuxième plateau autour d'un pivot d'axe tangent par rapport à la direction radiale,
- chaque bras est conformé sous la forme d'une barre sensiblement rectiligne, le pivot est agencé à l'extrémité du bras opposée au mors, et le premier plateau est mobile vers le deuxième plateau pour provoquer le rapprochement des bras et le serrage des mors,
- chaque bras est conformé sensiblement en forme d'équerre, ie pivot est agencé au sommet de l'équerre, et l'extrémité de l'équerre qui est opposée au mors comporte un galet qui est susceptible d'être sollicité axialement par un troisième plateau coulissant axialement dans le deuxième plateau en direction du premier plateau fixe pour provoquer le rapprochement des mors,
- les mors sont montés à des premières extrémités de deux bras dont des secondes extrémités opposées sont montées coulissantes radialement l'une vers l'autre sur le deuxième plateau,
- la seconde extrémité de chaque bras comporte une portion filetée qui est destinée à coopérer avec une vis sans fin d'orientation radiale qui est motorisée pour permettre le déplacement radial de la seconde extrémité sur le deuxième plateau,
- le dispositif comporte au moins deux rouleaux parallèles montés à rotation sur le second plateau, dont les axes sont mobiles radialement entre une position écartée dans laquelle les rouleaux sont écartés l'un de l'autre pour permettre le passage de la gouttière entre les rouleaux, et une position rapprochée dans laquelle les axes des rouleaux sont rapprochés et dans laquelle les rouleaux sont mus en rotation en sens inverse l'un de l'autre de manière que des portées cylindriques d'extrémité des rouleaux, formant les mors et d'écartement correspondant au rapprochement des deux bords extérieurs de la gouttière à obtenir, provoquent l'écrasement des bords de la gorge intérieure sur l'étranglement du bourrelet.
- le second plateau comporte une pluralité d'outils de sertissage répartis angulairement de manière régulière.

L'invention concerne enfin un procédé de montage d'un diaphragme sur une jupe d'un servomoteur à l'aide d'un dispositif de montage du type décrit précédemment, caractérisé en ce qu'il comporte :
- un première étape au cours de laquelle on dépose le diaphragme sur le premier plateau,
- une deuxième étape au cours de laquelle on dépose la jupe sur le diaphragme et sur le premier plateau en faisant pénétrer le bourrelet dans la gorge de la gouttière,
- une troisième étape au cours de laquelle on mène les mors de l'outil de sertissage de part et d'autre des deux bords extérieurs de la gouttière au doit de l'étranglement du bourrelet en rapprochant les premier et deuxième plateaux dans une position angulaire relative déterminée,
- une quatrième étape au cours de laquelle on rapproche les mors de l'outil de sertissage pour écraser localement la gorge sur l'étranglement du bourrelet,
- une cinquième étape au cours de laquelle on écarte les mors de l'outil de sertissage,
- au moins une sixième étape au cours de laquelle on fait pivoter les premier et deuxième plateaux l'un par rapport à l'autre dans une autre position angulaire relative,
- au moins une septième étape au cours de laquelle on mène à nouveau les mors de l'outil de sertissage de part et d'autre des deux bords extérieurs de la gouttière dans ladite autre position angulaire relative,
- au moins une huitième étape au cours de laquelle on rapproche les mors de l'outil de sertissage pour écraser à nouveau localement la gorge sur l'étranglement du bourrelet dans ladite autre position angulaire relative,
- une avant-dernière étape au cours de laquelle on écarte les mors de l'outil de sertissage, et dans laquelle on écarte les premier et deuxième plateaux,
- une dernière étape au cours de laquelle on extrait l'ensemble constitué du diaphragme rendu solidaire de la jupe.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un servomoteur selon un état antérieur de la technique,
- la figure 2 est une vue en coupe d'un dispositif de montage d'un diaphragme sur une jupe pour un servomoteur conforme à l'invention,
- la figure 3 est une vue axiale en bout des deuxième et troisième plateaux du dispositif de la figure 2,
- la figure 4 est une vue en coupe d'un premier mode de réalisation d'un outil de sertissage du dispositif de montage d'un diaphragme, représenté en position d'écartement de ses mors,
- la figure 5 est une vue en coupe de l'outil de sertissage de la figure 4, représenté en position de serrage de ses mors,
- la figure 6 est une vue en coupe d'un outil de sertissage pour un dispositif de montage d'un diaphragme selon un deuxième mode de réalisation, représenté en position d'écartement de ses mors,
- la figure 7 est une vue en coupe de l'outil de sertissage de la figure 6, représenté en position de serrage de ses mors,
- la figure 8 est une vue en coupe d'un outil de sertissage pour un dispositif de montage d'un diaphragme selon un troisième mode de réalisation, représenté en position d'écartement de ses mors,
- la figure 9 est une vue en coupe de l'outil de sertissage de la figure 8, représenté en position de serrage de ses mors,
- la figure 10 est une vue en coupe d'un outil de sertissage pour un dispositif de montage d'un diaphragme selon un quatrième mode de réalisation, représenté en position d'écartement de ses mors,
- la figure 11 est une vue en coupe de l'outil de sertissage de la figure 10, représenté en position de serrage de ses mors,

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

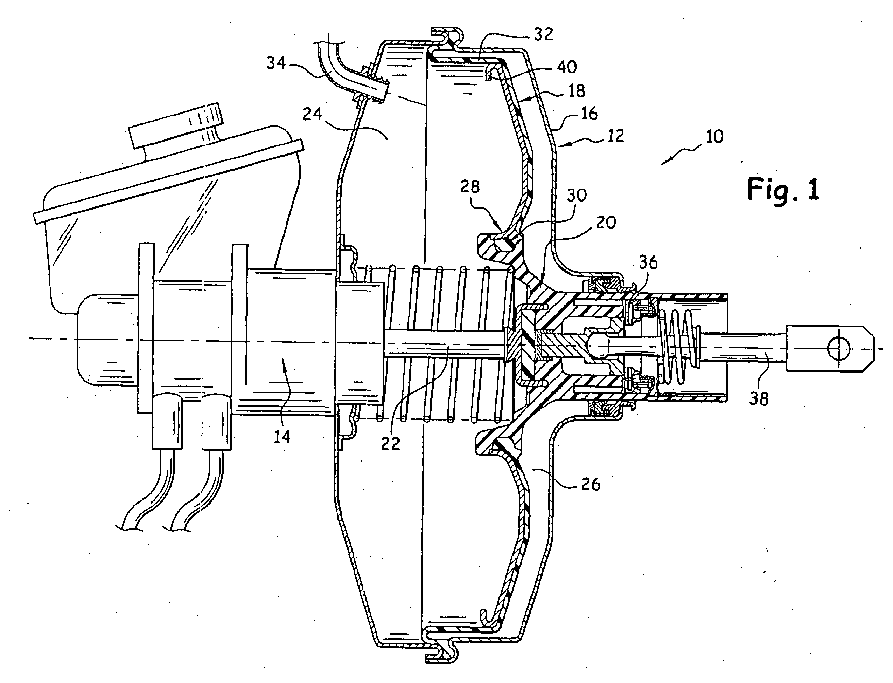

On a représenté à la figure 1 un servofrein 10 comportant un servomoteur 12 destiné à actionner un maître-cylindre 14 de freinage du véhicule.

De manière connue, le servomoteur 12 comporte une enveloppe 16 rigide sensiblement cylindrique à l'intérieur de laquelle est mobile une cloison transversale 18 qui est liée à une tige 22 d'actionnement du maître-cylindre 14 associé.

La cloison 18 transversale délimite de façon étanche dans l'enveloppe 16 deux chambres 24 et 26 de pression avant et arrière qui sont susceptibles d'être soumises à des pressions différentes pour actionner la tige 22 d'actionnement du maître-cylindre associé.

La chambre 24 de pression avant est susceptible d'être soumise par exemple à une dépression issue d'une tubulure d'admission (non représentée) d'un moteur du véhicule à laquelle elle est reliée par l'intermédiaire d'un conduit 34, et la chambre de pression arrière 26 est susceptible d'être mise en communication avec le milieu ambiant soumis à la pression atmosphérique par l'intermédiaire d'un clapet à trois voies 36 commandé par une tige de commande 38 du servomoteur 12, de manière que la différence de pression entre les chambres 24 avant et 26 arrière provoque le déplacement de la cloison mobile 18.

Plus particulièrement, la cloison 18 transversale mobile comporte un piston 20 central solidaire d'une jupe 28 périphérique en tôle qui est recouverte, au moins à proximité de sa périphérie 40, d'un diaphragme 30 d'étanchéité en matériau élastomère dont une périphérie 32 est fixée à l'enveloppe 16 de manière étanche.

Conventionnellement, comme l'illustre la figure 1, le diaphragme est fixé dans deux zones, d'une part à la jupe du servomoteur à ia jonction de ia jupe ei du piston central, et d'autre part sur la périphérie de la jupe.

Cette conception impose que le diaphragme recouvre totalement la jupe. Par ailleurs, elle pose de nombreux problèmes d'étanchéité, d'une part, à la jonction de la jupe et du piston où l'étanchéité doit être réalisée entre ces trois éléments et d'autre part, à la périphérie de la jupe qui constitue une zone suivant laquelle la membrane, fixée sur sa périphérie à l'enveloppe du servomoteur, est soumise à des forces de traction élevées.

Pour remédier à cet inconvénient, l'invention propose un servomoteur du type précédemment décrit, comportant des moyens d'étanchéité améliorés qui sont interposés entre la jupe et la membrane dans une partie intermédiaire de la jupe.

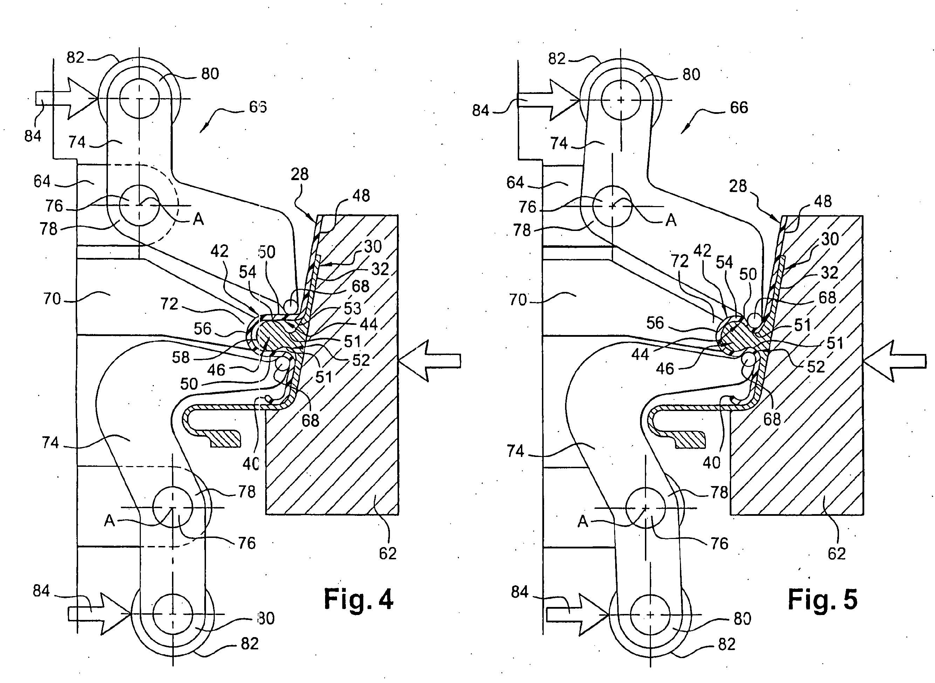

Dans ce but, comme l'illustrent les figures 4 à 11, l'invention propose un servomoteur du type décrit précédemment, caractérisé en ce que la jupe 28 comporte, à proximité de sa périphérie 40, un gouttière 42 annulaire emboutie délimitant une gorge 44 intérieure qui est destinée à recevoir sans jeu un bourrelet 46 périphérique qui fait saillie à la surface du diaphragme 30 pour assurer la fixation étanche dudit diaphragme 30 sur la jupe 28.

Plus particulièrement, la gouttière 42 comporte, à proximité de la surface 48 de la jupe, des bords extérieurs 50 qui sont destinés à être écrasés l'un vers l'autre pour serrer localement la gorge intérieure 44, comme l'illustrent les figures 4 à 11, sur un étranglement 52 du bourrelet 46, pour immobiliser axialement le diaphragme 30 par rapport à la jupe 28.

Dans le mode de réalisation préféré de l'invention, l'étranglement 52 comporte deux gorges 51 incurvées opposées qui sont alignées perpendiculairement à l'orientation axiale générale du bourrelet, mais cette configuration n'est pas limitative de l'invention, le bourrelet 46 pouvant ne comporter qu'une gorge 51 ou bien deux gorges 51 opposées mais de forme différente de la forme incurvée.

Dans ie mode de réalisation préféré de l'invention, les parois 54 de la gouttière 42 se rejoignent en un fond 56 sensiblement arrondi. Par ailleurs, le bourrelet 46 comporte une extrémité 58 arrondie, agencée à l'opposé de la surface du diaphragme 30 par rapport à l'étranglement 52, qui est complémentaire du fond 56 arrondi de la gouttière 42 à l'intérieur de la gorge 44. Cette configuration permet, comme on le verra dans la suite de la présente description, de garantir un appui optimal du bourrelet 46 dans la gouttière 42 et d'éviter ainsi son glissement pendant le serrage des bords extérieurs 50.

L'invention concerne aussi un dispositif 60 de montage pour la fixation d'un diaphragme 30 à une jupe 28 d'un servomoteur 10 tels que précédemment décrit.

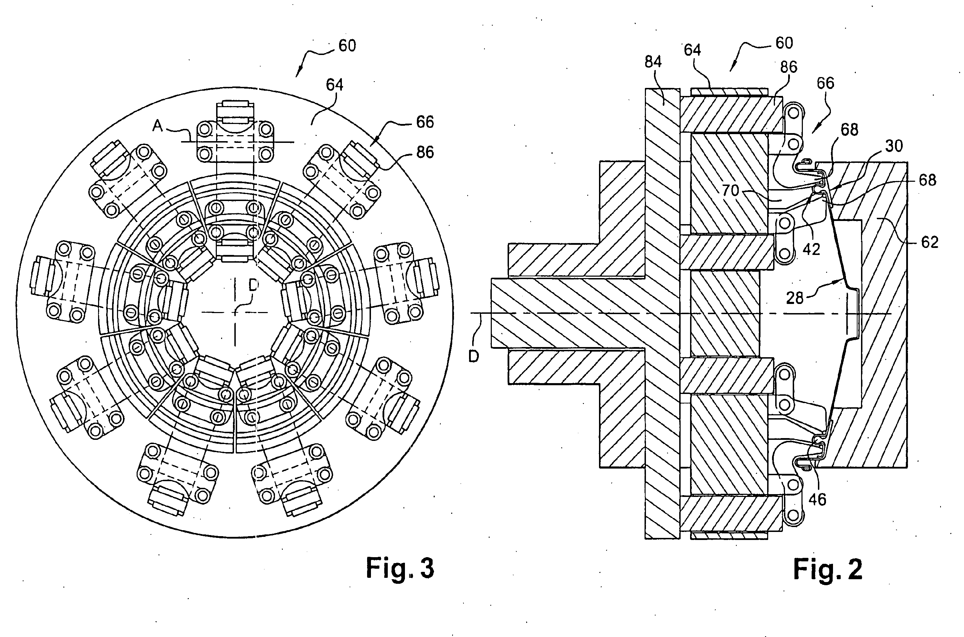

Un tel dispositif 60 de montage a été représenté aux figures 2 à 11.

D'une manière générale, le dispositif 60 comporte un premier plateau 62 d'axe "D" qui est destiné à solliciter axialement le diaphragme 30 au contact de la jupe 28 du côté opposé au bourrelet 46 et à la gouttière 42, pour maintenir le bourrelet 46 dans la gorge 44 intérieure de la gouttière 42.

Le dispositif 60 comporte par ailleurs au moins un deuxième plateau 64, d'axe "D" et agencé à l'opposé du premier plateau 62, qui comporte, en regard de la gouttière 42, au moins un outil 66 de sertissage périphérique qui est destiné à écraser localement l'un vers l'autre les deux bords extérieurs 50 opposés de la gouttière 42 pour que les bords 53 correspondants de la gorge intérieure 44, épousent l'étranglement 52 et immobilisent le bourrelet 46 dans la gorge 44 de la gouttière 42.

Plusieurs modes de réalisation des outils 66 de sertissage peuvent être envisagés. Toutefois, dans tous les modes de réalisation de l'invention, chaque outil 66 de sertissage comporte au moins deux mors 68 qui sont opposés et alignés sensiblement suivant la direction radiale et qui sont destinés à écraser localement l'un vers l'autre les deux bords extérieurs 50 de la gouttière au droit de l'étranglement 52.

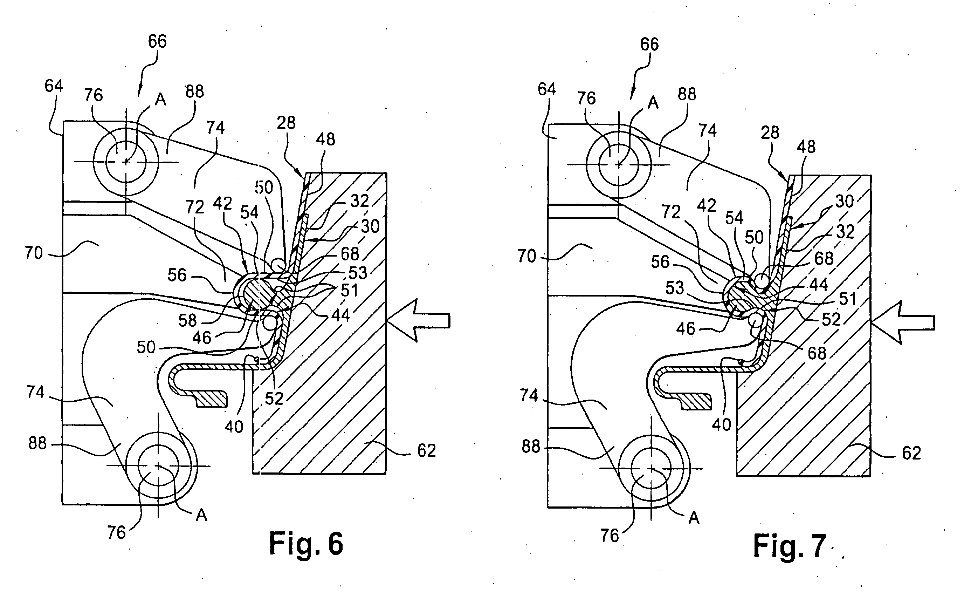

Dans un premier mode de réalisation du dispositif 60 qui a été représenté aux figures 2 à 5 et dans un deuxième mode de réalisation qui a été représenté aux figures 6 et 7, chaque outil 66 de sertissage comporte un bras 70 d'appui fixe, qui est agencé en retrait entre les mors 68, et dont l'extrémité 72 comporte une surface d'appui concave complémentaire de la paroi extérieure convexe du fond arrondi 56 de la gouttière 42, pour maintenir la gouttière 42 lors de l'écrasement des bords 43 de la gorge intérieure 44.

Cette configuration permet d'éviter le pliage du fond arrondi 56 de la gouttière 42 lorsque les mors 68 déforment la gouttière 42.

Dans ces deux modes de réalisation, chaque mors 68 est conformé en portion de cylindre d'orientation tangente au bourrelet 46, d'une courbure sensiblement égale celle d'une gorge 51 associée de l'étranglement 52, et est porté par l'extrémité d'un bras 74 qui est monté pivotant sur le deuxième plateau 64 autour d'un pivot 76 d'axe "A" tangent par rapport à la direction radiale

Dans le premier mode de réalisation de l'invention, chaque bras 74 est conformé sensiblement en forme d'équerre. Le pivot 76 est agencé sensiblement au sommet 78 de l'équerre, et l'extrémité 80 de l'équerre qui est opposée au mors 68 comporte un galet 82 qui est susceptible d'être sollicité axialement par un troisième plateau 84 coulissant axialement dans le deuxième plateau 64 en direction du premier plateau 62 fixe pour provoquer le rapprochement des mors 68. Le troisième plateau 84 peut par exemple, comme l'illustre la figure 3, solliciter le deuxième plateau 64 par l'intermédiaire de poussoirs 86 qui traversent le deuxième plateau 64.

Dans le deuxième mode de réalisation de l'invention qui a été représenté aux figures 6 et 7, chaque bras 74 est conformé sous la forme d'une barre. Le pivot 76 est agencé à l'extrémité 88 du bras qui est opposée au mors 68, et le premier plateau 62 est mobile vers le deuxième plateau 64 pour provoquer le rapprochement des bras 74 et le serrage des mors 68.

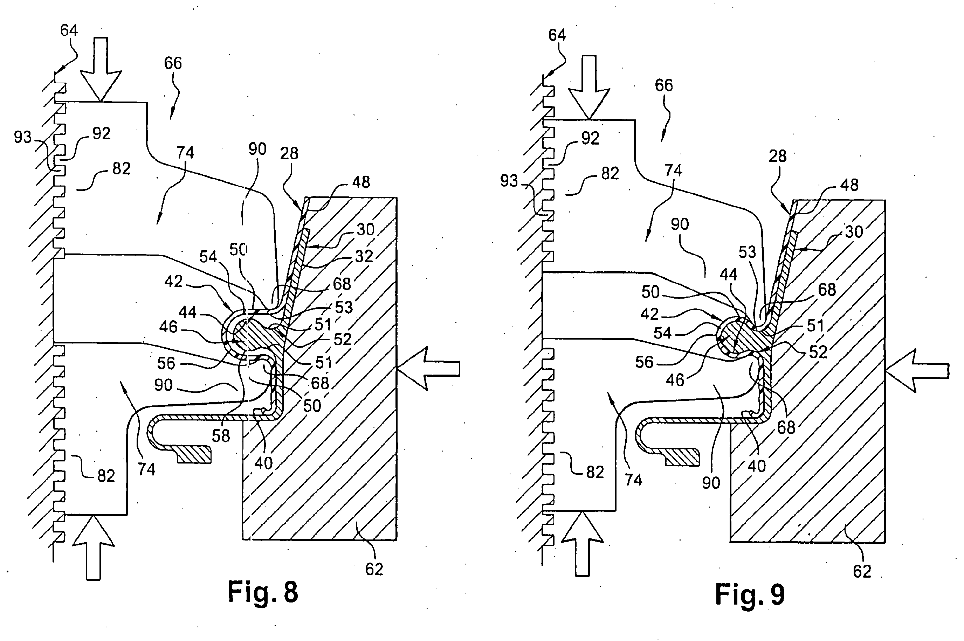

Selon un troisième mode de réalisation qui a été représenté aux figures 8 et 9, les mors 68 sont montés à des premières extrémités 90 de deux bras 74 dont des secondes extrémités 82 opposées sont montées coulissantes radialement l'une vers l'autre sur le deuxième plateau 64.

Dans la configuration qui a été représentée aux figures 8 et 9, l'outil 66 de sertissage ne comporte pas de bras d'appui fixe, mais cette disposition n'est aucunement limitative de l'invention et il sera compris que l'outil 66 pourrait comporter un bras d'appui fixe du type du bras 70 précédemment décrit.

Par exemple, la seconde extrémité 82 de chaque bras 74 comporte une portion filetée 92 qui est destinée à coopérer avec une vis sans fin 93 d'orientation radiale qui est motorisée pour permettre le déplacement radial de la seconde extrémité 92 sur le deuxième plateau 64, et donc le déplacement des mors 68.

Chaque bras 74 peut comporter une portion filetée destinée à coopérer avec une vis sans fin associée, motorisée de façon indépendante de l'autre vis.

Toutefois, dans le mode de réalisation préféré de l'invention, les portions filetées 92 des deux bras 74 sont filetées en sens inverse l'une de l'autre et elles sont associées à une vis unique 93 comportant deux jeux de filets également inverse l'un de l'autre, pour assurer une synchronisation des mouvements des bras 74.

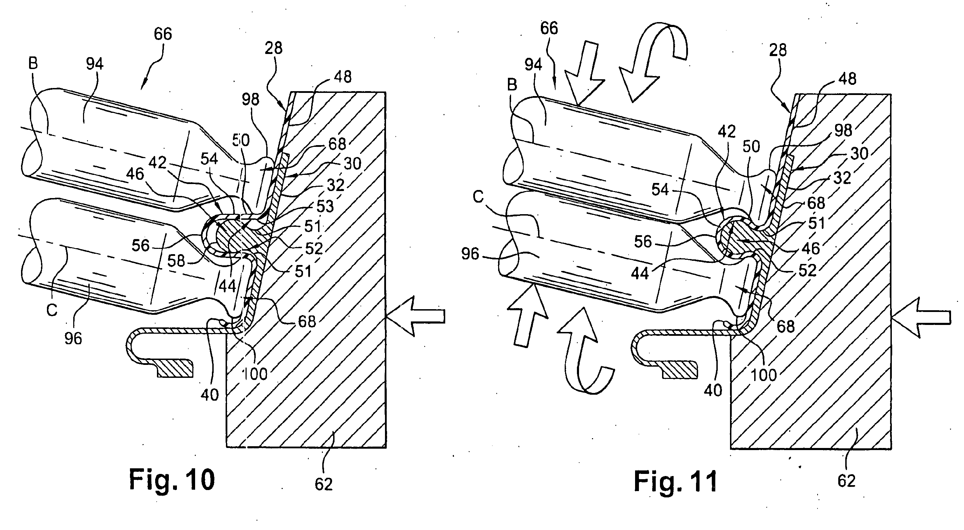

Selon un quatrième mode de réalisation de l'invention qui a été représenté aux figures 10 et 11, le dispositif 60 de montage comporte au moins deux rouleaux 94 et 96 parallèles qui sont montés à rotation sur le second plateau 64, dont les axes "B" et "C" sont mobiles radialement entre une position écartée, représentée à la figure 10, dans laquelle les rouleaux 94, 96 sont écartés l'un de l'autre pour permettre le passage de le gouttière 42 entre les rouleaux 94, 96 lors de l'avancée du plateau 64, et une position rapprochée représentée à la figure 11, dans laquelle les axes "B", "C" des rouleaux 94, 96 sont rapprochés et dans laquelle les rouleaux 94, 96 sont mus en rotation en sens inverse l'un de l'autre de manière que des portées cylindriques 98, 100 d'extrémité des rouleaux 94, 96, formant les mors 68 et d'écartement correspondant au rapprochement des deux bords extérieurs 50 de la gouttière à obtenir, provoquent l'écrasement des bords 43 de la gorge intérieure 44 sur l'étranglement 52 du bourrelet 46.

Il sera compris que, dans ce quatrième mode de réalisation du dispositif 60, tous les moyens connus de l'état de la technique peuvent être utilisés pour assurer le déplacement des axes "B" et "C" des rouleaux et la rotation des rouleaux 94, 96.

Dans tous les modes de réalisation du dispositif 60, le second plateau 64 comporte une pluralité d'outils 66 de sertissage qui sont répartis angulairement de manière régulière.

Par exemple, le dispositif 60 peut comporter neuf outils 66, comme représenté à la figure 2.

L'invention concerne enfin un procédé de montage d'un diaphragme 30 sur une jupe 28 d'un servomoteur 10 à l'aide d'un dispositif 60 de montage tel que précédemment décrit.

Conformément à l'invention, ce procédé comporte :
- un première étape au cours de laquelle on dépose le diaphragme 30 sur le premier plateau 62,
- une deuxième étape au cours de laquelle on dépose la jupe 28 sur le diaphragme 30 et sur le premier plateau 62 en faisant pénétrer le bourrelet 46 dans la gorge 42,
- une troisième étape, représentée aux figures 2, 4, 6, 8 et 10, au cours de laquelle on mène les mors 68 de l'outil 66 de sertissage de part et d'autre des deux bords extérieurs 50 de la gouttière 42 au droit de l'étranglement 52 en rapprochant les premier et deuxième plateaux 62, 64 dans une position angulaire relative déterminée
- une quatrième étape, représentée aux figures 5, 7, 9 et 11 au cours de laquelle on rapproche les mors 68 de l'outil 66 de sertissage pour écraser localement la gorge 44 sur l'étranglement 52 du bourrelet 46,
- une cinquième étape au cours de laquelle on écarte les mors 68 de l'outil de sertissage,
- au moins une sixième étape au cours de laquelle on fait pivoter les premier et deuxième plateaux 62, 64 l'un par rapport à l'autre dans une autre position angulaire relative,
- au moins une septième étape au cours de laquelle on mène à nouveau les mors 68 de l'outil 66 de sertissage de part et d'autre des deux bords extérieurs 50 de la gouttière 42 dans ladite autre position angulaire relative, comme représenté aux figures 2, 4, 6, 8 et 10,
- au moins une huitième étape au cours de laquelle on rapproche les mors 68 de l'outil 66 de sertissage pour écraser à nouveau localement la gorge 52 sur l'étranglement 52 du bourrelet 50 dans ladite autre position angulaire relative, comme représenté aux figures 5, 7, 9 et 1 1 ,
- une avant-dernière étape au cours de laquelle on écarte les mors 68 de l'outil 66 de sertissage, et dans laquelle on écarte les premier et deuxième plateaux 62, 64,
- et une dernière étape au cours de laquelle on extrait l'ensemble constitué du diaphragme 30 rendu solidaire de la jupe 28.

Il sera compris que le procédé peut comporter autant de sixième, septième et huitième étapes qu'il est nécessaire pour que l'ensemble des outils 66 de sertissage permette de sertir la gouttière 42 sur le bourrelet 50 suivant toute sa périphérie.

En particulier, plus le nombre d'outils 66 sera élevé, moins il sera nécessaire d'effectuer de rotations relatives de deux plateaux 62 et 64. Par exemple, avec un dispositif du type de celui représenté à la figure 2, une seule rotation relative des plateaux 62 et 64 est nécessaire, l'écartement entre les mors de deux outils 66 consécutifs étant inférieur à la largeur d'un mors 68, ce qui permet de sertir toute la gouttière 42 sur le bourrelet 50 en effectuant une seule rotation relative des plateaux 62 et 64.

L'invention permet donc de fixer avantageusement un diaphragme 30 à une jupe 28 de manière étanche et de proposer un assemblage résistant de ces deux éléments.

## Revendications

1. Servomoteur (12) pneumatique d'assistance au freinage pour un véhicule automobile, du type qui comporte une enveloppe (16) rigide sensiblement cylindrique à l'intérieur de laquelle est mobile une cloison (18) transversale liée à une tige (22) d'actionnement d'un maître-cylindre (14) associé, qui délimite de façon étanche dans l'enveloppe (16) deux chambres (24, 26) de pression qui sont susceptibles d'être soumises à des pressions différentes pour actionner la tige (22) d'actionnement du maître cylindre associé,
du type dans lequel la cloison (18) transversale mobile comporte un piston (20) central solidaire d'une jupe (28) périphérique en tôle qui est recouverte au moins à proximité de sa périphérie (40) d'un diaphragme (30) d'étanchéité en matériau élastomère dont une périphérie (32) est fixée à l'enveloppe (16) de manière étanche,
**caractérisé en ce que** la jupe (28) comporte, à proximité de sa périphérie (40), un gouttière (42) annulaire emboutie délimitant une gorge (44) intérieure qui est destinée à recevoir sans jeu un bourrelet (46) périphérique qui fait saillie à la surface du diaphragme (30) pour assurer la fixation étanche dudit diaphragme (30) sur la jupe (28).

2. Servomoteur (12) selon la revendication précédente, **caractérisé en ce que** la gouttière (42) comporte, à proximité de la surface (48) de la jupe (28), des bords extérieurs (50) qui sont destinés à être écrasés l'un vers l'autre pour serrer localement la gorge intérieure (44) sur un étranglement (52) du bourrelet (46) pour immobiliser axialement le diaphragme (30) par rapport à la jupe (28).

3. Servomoteur (12) selon la revendication précédente, **caractérisé en ce que** les parois (54) de la gouttière (42) se rejoignent en un fond (56) sensiblement arrondi.

4. Servomoteur (12) selon la revendication précédente, **caractérisé en ce que** le bourrelet (46) comporte une extrémité (58) arrondie, agencée à l'opposé de la surface du diaphragme par rapport à l'étranglement (52), qui est complémentaire du fond (56) arrondi de la gouttière (42) à l'intérieur de la gorge (44).

5. Dispositif (60) de montage pour la fixation d'un diaphragme (30) à une jupe (28) d'un servomoteur selon l'une des revendications 2 à 4, **caractérisé en ce qu'**il comporte au moins :
- un premier plateau (62) qui est destiné à solliciter axialement le diaphragme (30) au contact de la jupe (28) du côté opposé au bourrelet (46) et à la gouttière (42), pour maintenir le bourrelet (46) dans la gorge (44) intérieure de la gouttière (42),
- un deuxième plateau (64), agencé à l'opposé du premier plateau (62), qui comporte, en regard de la gouttière (42), au moins un outil (66) de sertissage périphérique qui est destiné à écraser localement l'un vers l'autre lés deux bords (50) extérieurs opposés de la gouttière (42) au droit de l'étranglement (52) du bourrelet pour que les bords (53) correspondants de la gorge intérieure (44) épousent l'étranglement (52) et immobilisent le bourrelet (46) dans la gorge (44).

6. Dispositif (60) de montage selon la revendication précédente, **caractérisé en ce que** chaque outil (66) de sertissage comporte au moins deux mors (68) qui sont opposés, alignés sensiblement suivant la direction radiale, et qui sont agencés suivant une position axiale déterminée pour écraser localement l'un vers l'autre les deux bords extérieurs (50) de la gouttière (42) au droit de l'étranglement (52)

7. Dispositif (60) de montage selon la revendication précédente prise en combinaison avec l'une des revendications 3 ou 4, **caractérisé en ce que** chaque outil (66) de sertissage comporte un bras (70) d'appui fixe, qui est agencé en retrait entre les mors (68), et dont l'extrémité (72) comporte une surface d'appui concave complémentaire de la paroi extérieure convexe du fond arrondi (56) de la gouttière (42), pour maintenir la gouttière (42) lors de l'écrasement des bords (43) de la gorge intérieure (44).

8. Dispositif (60) de montage selon la revendication précédente, **caractérisé en ce que** chaque mors (68) est conformé en portion de cylindre d'orientation tangente au bourrelet (46), d'une courbure sensiblement égale celle dune gorge associée de l'étranglement (52), et **en ce qu'**il est porté par l'extrémité d'un bras (74) qui est monté pivotant sur le deuxième plateau autour d'un pivot (76) d'axe (A) tangent par rapport à la direction radiale.

9. Dispositif (60) de montage selon la revendication précédente, **caractérisé en ce que** chaque bras (74) est conformé sous la forme d'une barre sensiblement rectiligne, **en ce que** le pivot (76) est agencé à l'extrémité (88) du bras (74) opposée au mors (68), et **en ce que** le premier plateau (62) est mobile vers le deuxième plateau (64) pour provoquer le rapprochement des bras (74) et le serrage des mors (68).

10. Dispositif (60) de montage selon la revendication 8, **caractérisé en ce que** chaque bras (74) est conformé sensiblement en forme d'équerre, **en ce que** le pivot (76) est agencé au sommet (78) de l'équerre, et **en ce que** l'extrémité (80) de l'équerre qui est opposée au mors (68) comporte un galet (82) qui est susceptible d'être sollicité axialement par un troisième plateau (84) coulissant axialement dans le deuxième plateau (64) en direction du premier plateau (62) fixe pour provoquer le rapprochement des mors (68).

11. Dispositif (60) de montage selon la revendication 6, **caractérisé en ce que** les mors (68) sont montés à des premières extrémités (90) de deux bras (74) dont des secondes extrémités (82) opposées sont montées coulissantes radialement l'une vers l'autre sur le deuxième plateau (64).

12. Dispositif (60) de montage selon la revendication précédente, **caractérisé en ce que** la seconde extrémité (82) de chaque bras comporte une portion filetée (92) qui est destinée à coopérer avec une vis (93) sans fin d'orientation radiale qui est motorisée pour permettre le déplacement radial de la seconde extrémité (82) sur le deuxième plateau (64).

13. Dispositif (60) de montage selon la revendication 6, **caractérisé en ce qu'**il comporte au moins deux rouleaux (94, 96) parallèles montés à rotation sur le second plateau, dont les axes (B, C) sont mobiles radialement entre une position écartée dans laquelle les rouleaux (94, 96) sont écartés l'un de l'autre pour permettre le passage de la gouttière (42) entre les rouleaux (94, 96), et une position rapprochée dans laquelle les axes (B, C) des rouleaux (94, 96) sont rapprochés et dans laquelle les rouleaux (94, 96) sont mus en rotation en sens inverse l'un de l'autre de manière que des portées cylindriques (98, 100) d'extrémité des rouleaux (94, 96), formant les mors (68) et d'écartement correspondant au rapprochement des deux bords extérieurs (50) de la gouttière (42) à obtenir, provoquent l'écrasement des bords de la gorge intérieure (44) sur l'étranglement (52) du bourrelet (46)

14. Dispositif (60) de montage selon l'une quelconque des revendications 5 à 13, **caractérisé en ce que** le second plateau (64) comporte une pluralité d'outils (66) de sertissage répartis angulairement de manière régulière.

15. Procédé de montage d'un diaphragme (30) sur une jupe (28) d'un servomoteur (12) selon l'une des revendications 2 à 4 à l'aide d'un dispositif (60) de montage selon l'une des revendications 5 à 14, **caractérisé en ce qu'**il comporte :
- un première étape au cours de laquelle on dépose le diaphragme (30) sur le premier plateau (62),
- une deuxième étape au cours de laquelle on dépose la jupe (28) sur le diaphragme (30) et sur le premier plateau (62) en faisant pénétrer le bourrelet (46) dans la gorge (44) de la gouttière (46),
- une troisième étape au cours de laquelle on mène les mors (68) de l'outil (66) de sertissage de part et d'autre des deux bords extérieurs (50) de la gouttière (46) au droit de l'étranglement (52) du bourrelet (46) en rapprochant les premier et deuxième plateaux (62, 64) dans une position angulaire relative déterminée,
- une quatrième étape au cours de laquelle on rapproche les mors (68) de l'outil (66) de sertissage pour écraser localement la gorge (44) sur l'étranglement (52) du bourrelet (46),
- une cinquième étape au cours de laquelle on écarte les mors (68) de l'outil (60) de sertissage,
- au moins une sixième étape au cours de laquelle on fait pivoter les premier et deuxième plateaux (62, 64) l'un par rapport à l'autre dans une autre position angulaire relative,
- au moins une septième étape au cours de laquelle on mène à nouveau les mors (68) de l'outil (60) de sertissage de part et d'autre des deux bords extérieurs (50) de la gouttière (42) dans ladite autre position angulaire relative,
- au moins une huitième étape au cours de laquelle on rapproche les mors (68) de l'outil (60) de sertissage pour écraser à nouveau localement la gorge (44) sur l'étranglement (52) du bourrelet (46) dans ladite autre position angulaire relative,
- une avant-dernière étape au cours de laquelle on écarte les mors (68) de l'outil (60) de sertissage, et dans laquelle on écarte les premier et deuxième plateaux (62, 64),
- une dernière étape au cours de laquelle on extrait l'ensemble constitué du diaphragme (30) rendu solidaire de la jupe (28).

## Claims

1. A pneumatic servomotor (12) for power-assisted braking for a motor vehicle, which servomotor is: of the type having a substantially cylindrical rigid casing (16) inside which a moving transverse partition (18) is movably mounted that is coupled to an actuating rod (22) for actuating an associated master cylinder (14), and that defines in leaktight manner and inside the casing (16) two pressure chambers (24, 26) that are suitable for being subjected to different pressures in order to actuate the actuating rod (22) for actuating the associated master cylinder;
of the type in which the moving transverse partition (18) has a central piston (20) that is secured to a peripheral skirt (28) which is made of sheet metal and which is covered, at least in the vicinity of its periphery (40), with a sealing diaphragm (30) made of an elastomer material and whose periphery (32) is fixed to the casing (16) in leaktight manner;
said servomotor being **characterized in that**, in the vicinity of the periphery (40) of the skirt (28), said skirt is provided with a stamped annular recess (42) defining an internal groove (44) which serves to receive snugly a peripheral bead (46) which projects from the surface of the diaphragm (30) in order to fix said diaphragm (30) to the skirt (28) in leaktight manner.

2. A servomotor (12) according to the preceding claim, **characterized in that**, in the vicinity of the surface (48) of the skirt (28), the recess (42) has outer edges (50) which serve to be flattened towards each other to close the internal groove (44) locally onto a neck (52) of the bead (46) to hold the diaphragm (30) stationary axially relative to the skirt (28).

3. A servomotor (12) according to the preceding claim, **characterized in that** the walls (54) of the recess (42) meet at a substantially rounded end-wall (56).

4. A servomotor (12) according to the preceding claim, **characterized in that** the bead (46) has a rounded end (58) arranged on the side of the neck (52) remote from the surface of the diaphragm, and that is complementary to the rounded end-wall (56) of the recess (42) inside the groove (44).

5. An assembly device (60) for fixing a diaphragm (30) to a skirt (28) of a servomotor according to any one of claims 2 to 4, said device being **characterized in that** it comprises at least:
a first disk (62) which presses against the side of the diaphragm (30) which is opposite from the bead (46) and from the recess (42) to urge the diaphragm (30) axially into contact with the skirt (28) so as to hold the bead (46) in the groove (44) inside the recess (42); and
a second disk (64), arranged facing the first disk (62), which second disk is provided, facing the recess (42), with at least one peripheral crimping tool (66) which serves to crimp the two opposite outer edges (50) of the recess (42) towards each other locally at the neck (52) of the bead so that the corresponding edges (53) of the internal groove (44) fit snugly onto the neck (52) and hold the bead (46) stationary in the groove (44).

6. An assembly device (60) according to any preceding claim, **characterized in that** each crimping tool (66) has at least two opposite jaws (68) that are mutually aligned substantially in the radial direction, and that are arranged at a determined axial position to crimp the two outer edges (50) of the recess (42) towards each other locally at the neck (52).

7. An assembly device (60) according to the preceding claim taken in combination with claim 3 or claim 4, **characterized in that** each crimping tool (66) has a fixed abutment arm (70) which is arranged in set-back manner between the jaws (68), and whose end (72) has a concave abutment surface that is complementary to the convex outside wall of the rounded end-wall (56) of the recess (42), so as to hold the recess (42) while the edges (43) of the internal groove (44) are being flattened.

8. An assembly device (60) according to the preceding claim, **characterized in that** each jaw (68) is shaped to form a cylinder portion disposed tangentially to the bead (46), of curvature substantially equal to the curvature of an associated groove of the neck (52), and **in that** each jaw is carried by the end of a respective arm (74) which is mounted to pivot on the second disk about a pivot (76) having an axis (A) tangential to the radial direction.

9. An assembly device (60) according to the preceding claim, **characterized in that** each arm (74) is shaped in the form of a substantially rectilinear bar, **in that** the pivot (76) is arranged at that end (88) of the arm (74) which is opposite from the jaw (68), and **in that** the first disk (62) is mounted to move towards the second disk (64) to cause the arms (74) to be moved towards each other and to cause the jaws (68) to close.

10. An assembly device (60) according to claim 8, **characterized in that** each arm (74) is substantially angle-bracket-shaped, **in that** the pivot (76) is arranged at the angle (78) of the angle bracket, and **in that** that end (80) of the angle bracket which is opposite from the jaw (68) is provided with a wheel (82) which is suitable for being urged axially by a third disk (84) mounted to slide axially in the second disk (64) towards the fixed first disk (62) in order to cause the jaws (68) to move towards each other.

11. An assembly device (60) according to claim 6, **characterized in that** the jaws (68) are mounted at first ends (90) of second arms (74) whose opposite second ends (82) are mounted to slide radially towards each other on the second disk (64).

12. An assembly device (60) according to the preceding claim, **characterized in that** the second end (82) of each arm is provided with a threaded portion (92) which serves to co-operate with a worm screw (93) that extends radially and that is motor-driven in order to make it possible to move the second end (82) radially on the second disk (64).

13. An assembly device (60) according to claim 6, **characterized in that** it includes at least two parallel rollers (94, 96) mounted to turn on the second disk, the axes (B, C) of the rollers being moveable radially between a spaced-apart position in which the rollers (94, 96) are spaced apart from each other to allow the recess (42) to pass between the rollers (94, 96), and a close-together position in which the axes (B, C) of the rollers (94, 96) are moved close together and in which the rollers (94, 96) are turned in mutually opposite directions so that cylindrical bearing surfaces (98, 100) at the ends of the rollers (94, 96), which surfaces form the jaws (68) and are spaced apart by spacing corresponding to the extent to which the two outer edges (50) of the recess (42) are to be brought towards each other, cause the edges of the internal groove (44) to be flattened onto the neck (52) of the bead (46).

14. An assembly device (60) according to any one of claims 5 to 13, **characterized in that** the second disk (64) is provided with a plurality of crimping tools (66) distributed angularly in uniform manner.

15. A method of assembling a diaphragm (30) to a skirt (28) of a servomotor (12) according to any one of claims 2 to 4, by means of an assembly device (60) according to any one of claims 5 to 14, said method being **characterized in that** it comprises:
a first step during which the diaphragm (30) is deposited on the first disk (62);
a second step during which the skirt (28) is deposited on the diaphragm (30) and on the first disk (62) by causing the bead (46) to penetrate into the groove (44) in the recess (42);
a third step during which the jaws (68) of the crimping tool (66) are brought to on either side of the two outer edges (50) of the recess (42) at the neck (52) of the bead (46) by moving the first and second disks (62, 64) towards each other in a determined relative angular position;
a fourth step during which the jaws (68) of the crimping tool (66) are brought towards each other to crimp the groove (44) locally onto the neck (52) of the bead (46);
a fifth step during which the jaws (68) of the crimping tool (66) are moved apart;
at least one sixth step during which the first and second disks (62, 64) are caused to pivot relative to each other into another relative angular position;
at least one seventh step during which the jaws (68) of the crimping tool (66) are brought, once again, to either side of the two outer edges (50) of the recess (42), in said other relative angular position;
at least one eighth step during which the jaws (68) of the crimping tool (66) are moved towards each other to crimp the groove (52) locally onto the neck (52) of the bead (46) in said other relative angular position;
a penultimate step during which the jaws (68) of the crimping tool (66) are moved apart, and in which the first and second disks (62, 64) are moved apart; and
a last step during which the assembly comprising the diaphragm (30) secured to the skirt (28) is extracted.

## Patentansprüche

1. Pneumatischer Servomotor (12) zur Bremsunterstützung für ein Kraftfahrzeug, vom Typ, der ein starres, im Wesentlichen zylindrisches Gehäuse (16) aufweist, in dem eine quer verlaufende, mit einer Stange (22) zur Betätigung eines zugeordneten Hauptzylinders (14) verbundene Wand (18) beweglich ist, die im Gehäuse (16) in dichter Weise zwei Druckkammern (24, 26) begrenzt, die unterschiedlichen Drücken ausgesetzt sein können, um die Stange (22) zur Betätigung des zugeordneten Hauptzylinders zu betätigen,
vom Typ, bei dem die quer verlaufende, bewegliche Wand (18) einen mittleren Kolben (20) aufweist, der fest mit einer Umfangsschürze (28) aus Blech verbunden ist, welche mindestens in der Nähe ihres Umfangs (40) mit einer Dichtigkeitsmembran (30) aus Elastomermaterial bedeckt ist, bei der ein Umfang (32) in dichter Weise am Gehäuse (16) befestigt ist,
**dadurch gekennzeichnet, dass** die Schürze (28) in der Nähe ihres Umfangs (40) eine ringförmige, gezogene Rinne (42) aufweist, die eine innere Nut (44) begrenzt, welche einen an der Oberfläche der Membran (30) hervorstehenden Umfangswulst (46) ohne Spiel aufnehmen soll, um die dichte Befestigung der Membran (30) an der Schürze (28) zu gewährleisten.

2. Servomotor (12) nach dem vorhergehenden Anspruch, **dadurch gekennzeichnet, dass** die Rinne (42) in der Nähe der Oberfläche (48) der Schürze (28) Außenränder (50) aufweist, die zusammengepresst werden sollen, um die innere Nut (44) lokal auf eine Verengung (52) des Wulstes (46) zu klemmen, so dass die Membran (30) in Bezug auf die Schürze (28) axial blockiert ist.

3. Servomotor (12) nach dem vorhergehenden Anspruch, **dadurch gekennzeichnet, dass** die Wände (54) der Rinne (42) in einen Boden (56) zusammenlaufen, der im Wesentlichen abgerundet ist.

4. Servomotor (12) nach dem vorhergehenden Anspruch, **dadurch gekennzeichnet, dass** der Wulst (46) ein abgerundetes Ende (58) aufweist, das in Bezug auf die Verengung (52) zur Membranoberfläche entgegengesetzt angeordnet ist und zum abgerundeten Boden (56) der Rinne (42) in der Nut (44) komplementär ist.

5. Montagevorrichtung (60) zur Befestigung einer Membran (30) an einer Schürze (28) eines Servomotors nach einem der Ansprüche 2 bis 4, **dadurch gekennzeichnet, dass** sie mindestens folgendes aufweist:
- eine erste Platte (62), die die Membran (30) beim Kontakt mit der Schürze (28) auf der Seite, die zu dem Wulst (46) und zur Rinne (42) entgegengesetzt ist, axial beaufschlagen soll, um den Wulst (46) in der inneren Nut (44) der Rinne (42) zu halten,
- eine zweite Platte (64), die gegenüber von der ersten Platte (62) angeordnet ist und gegenüber von der Rinne (42) mindestens ein umlaufendes Falzwerkzeug (66) aufweist, das die beiden gegenüberliegenden Außenränder (50) der Rinne (42) senkrecht zur Verengung (52) des Wulstes lokal zusammenpressen soll, so dass die entsprechenden Ränder (53) der inneren Nut (44) sich an die Verengung (52) anpassen und den Wulst (46) in der Nut (44) blockieren.

6. Montagevorrichtung (60) nach dem vorhergehenden Anspruch, **dadurch gekennzeichnet, dass** jedes Falzwerkzeug (66) mindestens zwei gegenüberliegende Backen (68) aufweist, die im Wesentlichen in radialer Richtung ausgerichtet und gemäß einer bestimmten, axialen Position so angeordnet sind, dass die beiden Außenränder (50) der Rinne (42) senkrecht zur Verengung (52) lokal zusammengepresst werden.

7. Montagevorrichtung (60) nach dem vorhergehenden Anspruch in Kombination mit Anspruch 3 oder 4, **dadurch gekennzeichnet, dass** jedes Falzwerkzeug (66) einen feststehenden Anlagearm (70) aufweist, der zwischen den Backen (68) zurückspringend angeordnet ist und bei dem das Ende (72) eine konkave Anlagefläche aufweist, die zur konvexen Außenwand des abgerundeten Bodens (56) der Rinne (42) komplementär ist, um die Rinne (42) beim Zusammenpressen der Ränder (43) der inneren Nut (44) zu halten.

8. Montagevorrichtung (60) nach dem vorhergehenden Anspruch, **dadurch gekennzeichnet, dass** jede Backe (68) als Zylinderabschnitt ausgebildet ist, der zu dem Wulst (46) tangential ausgerichtet ist und eine Krümmung besitzt, die im Wesentlichen der Krümmung einer zugeordneten Nut der Verengung (52) entspricht, und dass sie von dem Ende eines Arms (74) getragen ist, der an der zweiten Platte um einen Drehzapfen (76) mit Tangentialachse (A) bezüglich der radialen Richtung schwenkbar angebracht ist.

9. Montagevorrichtung (60) nach dem vorhergehenden Anspruch, **dadurch gekennzeichnet, dass** jeder Arm (74) als Stab ausgebildet ist, der im Wesentlichen gerade ist, dass der Drehzapfen (76) an dem zur Backe (68) entgegengesetzten Ende (88) des Arms (74) angeordnet ist und dass sich die erste Platte (62) auf die zweite Platte (64) zubewegen kann, um das Annhähern der Arme (74) und das Klemmen der Backen (68) zu bewirken.

10. Montagevorrichtung (60) nach Anspruch 8, **dadurch gekennzeichnet, dass** jeder Arm (74) im Wesentlichen winkelförmig ausgebildet ist, dass der Drehzapfen (76) an der Spitze (78) des Winkels angeordnet ist und dass das zur Backe (68) entgegengesetzte Ende (80) des Winkels eine Rolle (82) aufweist, die von einer dritten Platte (84) axial beaufschlagt werden kann, welche in der zweiten Platte (64) axial zur ersten, feststehenden Platte (62) hin gleitet, um das Annähern der Backen (68) zu bewirken.

11. Montagevorrichtung (60) nach Anspruch 6, **dadurch gekennzeichnet, dass** die Backen (68) an ersten Enden (90) der beiden Arme (74) angebracht sind, bei denen die zweiten, entgegengesetzten Ende (82) so angebracht sind, dass sie auf der zweiten Platte (64) radial aufeinander zu gleiten.

12. Montagevorrichtung (60) nach dem vorhergehenden Anspruch, **dadurch gekennzeichnet, dass** das zweite Ende (82) jedes Arms einen Gewindeabschnitt (92) aufweist, der mit einer Schnecke (93) mit radialer Ausrichtung zusammenwirken soll, welche motorisch angetrieben ist, um die radiale Verlagerung des zweiten Endes (82) auf der zweiten Platte (64) zu ermöglichen.

13. Montagevorrichtung (60) nach Anspruch 6, **dadurch gekennzeichnet, dass** sie mindestens zwei parallele Walzen (94, 96) aufweist, die drehbar an der zweiten Platte angebracht sind und deren Achsen (B, C) radial zwischen einer beabstandeten Position, in der die Walzen (94, 96) voneinander beabstandet sind, um den Durchgang der Rinne (42) zwischen den Walzen (94, 96) zu ermöglichen, und einer angenäherten Position beweglich sind, in der die Achsen (B, C) der Walzen (94, 96) angenähert sind und die Walzen (94, 96) zueinander entgegengesetzt so in Drehung versetzt werden, dass zylindrische Endbereiche (98, 100) der Walzen (94, 96), die die Backen (68) bilden und einen Abstand haben, der der zu erreichenden Annäherung der beiden Außenränder (50) der Rinne (42) entspricht, das Pressen der Ränder der inneren Nut (44) auf die Verengung (52) des Wulstes (46) bewirken.

14. Montagevorrichtung (60) nach einem der Ansprüche 5 bis 13, **dadurch gekennzeichnet, dass** die zweite Platte (64) mehrere Falzwerkzeuge (66) aufweist, die winkelmäßig gleichmäßig verteilt sind.

15. Verfahren zum Anbringen einer Membran (30) an einer Schürze (28) eines Servomotors (12) nach einem der Ansprüche 2 bis 4 mit Hilfe einer Montagevorrichtung (60) nach einem der Ansprüche 5 bis 14, **dadurch gekennzeichnet, dass** es folgendes umfasst:
- einen ersten Schritt, bei dem die Membran (30) auf die erste Platte (62) aufgebracht wird,
- einen zweiten Schritt, bei dem die Schürze (28) auf die Membran (30) und auf die erste Platte (62) aufgebracht wird, indem der Wulst (46) in die Nut (44) der Rinne (46) eingeführt wird,
- einen dritten Schritt, bei dem die Backen (68) des Falzwerkzeugs (66) auf der einen und der anderen Seite der beiden Außenränder (50) der Rinne (46) senkrecht zur Verengung (52) des Wulstes (46) geführt werden, indem die erste und die zweite Platte (62, 64) in eine bestimmte, relative Winkelposition angenähert werden,
- einen vierten Schritt, bei dem die Backen (68) des Falzwerkzeugs (66) so angenähert werden, dass sie die Nut (44) lokal auf die Verengung (52) des Wulstes (46) pressen,
- einen fünften Schritt, bei dem die Backen (68) des Falzwerkzeugs (66) weggerückt werden,
- mindestens einen sechsten Schritt, bei dem die erste und die zweite Platte (62, 64) in eine andere relative Winkelposition zueinander verschwenkt werden,
- mindestens einen siebten Schritt, bei dem die Backen (68) des Falzwerkzeugs (66) auf der einen und der anderen Seite der beiden Außenränder (50) der Rinne (42) erneut in die andere relative Winkelposition gebracht werden,
- mindestens einen achten Schritt, bei dem die Backen (68) des Falzwerkzeugs (66) so angenähert werden, dass sie in der anderen relativen Winkelposition erneut die Nut (44) lokal auf die Verengung (52) des Wulstes (46) pressen,
- einen vorletzten Schritt, bei dem die Backen (68) des Falzwerkzeugs (66) weggerückt werden und die erste und die zweite Platte (62, 64) weggerückt werden,
- einen letzten Schritt, bei dem die Baugruppe, die aus der Membran (30) besteht, die fest mit der Schürze (28) verbunden wurde, entfernt wird.
